(19) Europäisches Patentamt
European Patent Office
Office européen des brevets

(11) Publication number: **0 066 621**
**B1**

(12) # EUROPEAN PATENT SPECIFICATION

(45) Date of publication of patent specification: **21.11.85**

(51) Int. Cl.4: **B 29 C 55/02,** C 08 K 5/15, C 08 K 5/34

(21) Application number: **82900439.9**

(22) Date of filing: **16.12.81**

(86) International application number: **PCT/US81/01674**

(87) International publication number: **WO 82/02169 08.07.82 Gazette 82/17**

(54) **HINDERED PHENOLIC ANTIOXIDANTS AND DIAZACYCLOALKANE UV STABILIZERS IN POLYMERIC FILMS.**

(30) Priority: **22.12.80 US 219200**

(43) Date of publication of application: **15.12.82 Bulletin 82/50**

(45) Publication of the grant of the patent: **21.11.85 Bulletin 85/47**

(84) Designated Contracting States: **BE DE FR GB LU NL**

(56) References cited:
**GB-A-1 172 038**
**US-A-2 956 306**
**US-A-3 330 859**
**US-A-3 441 575**
**US-A-3 536 797**
**US-A-3 869 533**
**US-A-4 097 452**
**US-A-4 129 632**
**US-A-4 167 512**
**US-A-4 190 571**
**US-A-4 190 624**
**US-A-4 190 627**
**US-A-4 207 228**
**US-A-4 309 336**

(73) Proprietor: **The B.F. GOODRICH Company**
**Dept. 0015 WHB-6 500 South Main Street**
**Akron, Ohio 44318 (US)**

(72) Inventor: **KLETECKA, George**
**3303 Linden Road**
**Rocky River, OH 44116 (US)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 066 621 B1

**Description**

Background of the Invention

Polymer resins are used to prepare slit film ribbons which are substantially woven into fabrics useful for producing industrial bags and carpet backings. In making the slit film ribbons, a resin is extruded at a melt temperature of about 260°C (500°F) in the form of a sheet downwardly into a cooling water bath maintained at about 38°C (100°F). The extruded sheet, which is about 76,2 cm (30 inches) wide and about 127 μm (5 mils) in thickness, is slit into narrow ribbons of about 1,27 to 12,7 mm (50 to 500 mils) in width by a series of razors. These ribbons or tapes are drawn or stretched in an oven at about 177°C (350°F) to where they are about 50,8 μm (2 mils) thick. The drawing operation orients the molecules and imparts other changes to the film which provide a many-fold improvement in tensile strength thereof.

A water carryover problem occurs when the polymeric film emerges from the water bath. As the film is drawn upwardly from the water bath, a constant wall of water forms on the film just above the surface of the water which slowly moves up the film as the film speed is increased. When a critical speed is reached, the wall of water can no longer move upward and it breaks. This happens when the wall of water is about 2.5 cm (one inch) above the surface of the water and the result of it is a formation of water droplets which break off from the wall of water in increasing numbers as the film speed increases. These droplets cling to the film surface and if they are not removed, cause the ribbons to break in the drawing operation. Even when the ribbon does not break, water carryover can cause uneven film orientation, reduced tensile strength, and other undesirable properties. Mechanical means, such as air blowers and wipers, are used to help remove these droplets but are not entirely effective in severe cases.

The water carryover problem can be reduced or avoided by running the film at a reduced rate. This, however, is not a practical solution to the problem since it is desired to operate a commercial plant at a maximum speed.

Another more practical way to reduce water carryover is to reduce amount of the offending additive in the composition. If amount of the hindered phenolic antioxidant is reduced to a level at which water carryover is acceptable, it was found that processing stability is adversely affected. It is, therefore, desirable to circumvent this problem by the addition of a small amount of a co-stabilizer that contributes significantly to maintaining adequate processing stability without creating an additional increment of water carryover.

Processing stability, referred to in the preceding paragraph, is the ability to maintain the melt flow index through repeated processing cycles. Since melt flow index is related to polymer viscosity, degradative reactions occurring during processing lead either to chain scissions or chain crosslinking and cause the melt flow index to change. Processing stability is important not only during the initial product formation but also for reprocessing scrap and waste. Loss of ultraviolet stability and loss of other properties of polyolefin films has also been shown to be related to the presence of hydroperoxides formed during processing steps.

At bottom of column 9 of U.S. patent 4,190,571, it is disclosed that polymeric compositions containing 2-keto-1,4-diazacycloalkanes can also include hindered phenolic antioxidants in amounts ranging from 0.1 to 10 parts, preferably from 0.2 to 5 parts. This patent discloses a gamut of polymeric compositions including polyethylene and polypropylene, see bottom of col. 8. Amount of the diazacycloalkane in the polymeric compositions disclosed by the patent is 0.01 to 5 parts, preferably 0.1 to 1.0 part per 100 parts of the polymer. U.S. patent 4,207,228 makes similar disclosure in cols. 4, 11 and 12 with respect to 2-keto-1,5-diazacycloalkanes.

This invention relates to a method of making slit tape comprising extruding a polymer composition in the form of a sheet into a cooling water bath, slitting the sheet into ribbons after the sheet is withdrawn from the water bath, conveying the ribbons into an oven, and stretching the ribbons while they are in the oven to form slit tape, the polymer composition containing sufficient amounts of components A and B to reduce water carryover and improved processing stability.

Component A is selected from hindered phenolic compounds and mixtures thereof, wherein said compounds have the following general formula:

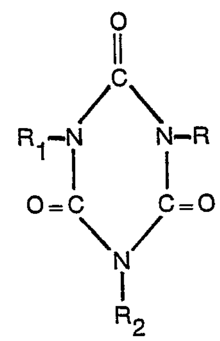

where R is a radical having the formula

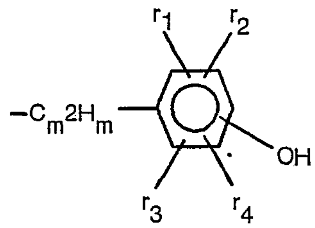

where m is a number of 1 to 4; $r_1$ is an aliphatic or cycloaliphatic alkyl group containing 1 to 18 carbon atoms positioned immediately adjacent to the hydroxyl group on the ring, and $r_2$, $r_3$ and $r_4$ are individually selected from hydrogen atoms and aliphatic or cycloaliphatic groups containing 1 to 18 carbon atoms; and $R_1$ and $R_2$ are individually selected from hydrogen atoms or they can be individually defined as the R group, above; and

component B is selected from 2-keto-1,4-diazacycloalkanes (I and II), 2-keto-1,5-diazacycloalkanes (III), and bis compounds thereof, having the following structural formulas:

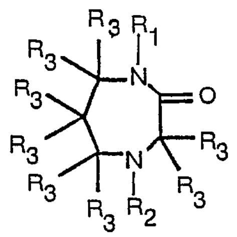

(I)

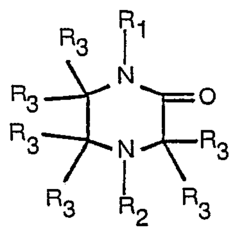

(II)

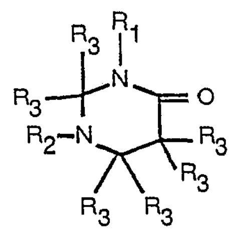

(III)

where $R_1$ and $R_2$ are individually selected from hydrogen atoms, alkyl groups of 1 to 12 carbon atoms, hydroxyalkyl groups of 1 to 12 carbon atoms, hydroxycycloalkyl and cycloalkyl groups of 5 to 14 carbon atoms, haloalkyl groups of 1 to 12 carbon atoms, cyanoalkyl groups of 2 to 12 carbon atoms, aminoalkyl and iminoalkyl groups of 1 to 12 carbon atoms, ether groups of 3 to 18 carbon atoms, hydroxyalkyl ether and cyanoalkyl ether groups of 4 to 18 carbon atoms, alkenyl and aralkenyl groups of 7 to 14 carbon atoms, and alkylene groups of 2 to 7 carbon atoms; and $R_3$ is individually selected from groups corresponding to the definition of $R_1$ and $R_2$, above.

Figure 1 is a graph indicating processing stability at 270°C of polypropylene film containing varying amounts of antioxidant A, tris(3,5-di-t-butyl-4-hydroxybenzyl)isocyanurate, and UV stabilizer B, 1,1'-(1,2-ethanediyl)-bis-(3,3,5,5,7-pentamethyl)-1,4-diazacycloheptane-2-one;

Figure 2 is a graph indicating processing stability at 270°C of polypropylene film containing varying amounts of compound A, tris(3,5-di-t-butyl-4-hydroxybenzyl)isocyanurate, and UV stabilizer C, 1,1'-(1,2-ethanediyl)-bis(3,3,5,5-tetramethyl-2-piperazinone);

Figure 3 is similar to Figure 1 except processing stability is tested at 300°C;

Figure 4 is similar to Figure 2 except processing stability is tested at 300°C;

Figure 5 is a plot of tensile strength versus hours in a weatherometer for polypropylene film samples containing two differeent loadings of antioxidant A, tris(3,5-di-t-butyl-4-hydroxybenzyl)isocyanurate;

Figure 6 is a plot of tensile strength versus hours in a weatherometer for polypropylene film samples containing antioxidant A, tris(3,5-di-t-butyl-4-hydroxybenzyl)isocyanurate, alone or in combination with UV stabilizer C, 1,1'-(1,2-ethanediyl)-bis(3,3,5,5-tetramethyl-2-piperazinone).

## Detailed Description of the Invention

It has been unexpectedly discovered that water carryover problem and processing stability of polymeric films can be improved by incorporating in a polymeric resin a hindered phenolic antioxidant and a 2-keto diazacycloalkane ultraviolet light stabilizer. Amount of the hindered phenol can vary from 0.005 to 0.5 part, preferably 0.01 to 0.09 part, and amount of 2-keto diazacycloalkane can vary from 0.001 to 1, preferably 0.005 to 0.5, part per 100 parts of the polymeric material.

Polymeric materials referred to herein are organic materials which undergo thermal and oxidative degradation as evidenced by discoloration and/or embrittlement. These materials include homopolymers, copolymers and mixtures thereof. Specific examples of such polymeric materials are natural rubber, synthetic rubbers, polyepichlorohydrin polymers, polyurethanes, PVC resins, ABS resins, polystyrene, polyamides, polyacrylonitrile, polyacrylates, polymethacrylates, polycarbonates, phenol formaldehyde resins, polyepoxides, polyethylene, polypropylene, ethylene-propylene polymers, ethylene-propylene-diene polymers, ethylene vinyl acetate polymers, and the like.

Preferred polymeric materials for the invention described herein are homopolymers of α-olefins such as polyethylene and polypropylene, and their copolymers; vinyl resins made by polymerizing vinyl halides or by copolymerizing vinyl halides with unsaturated polymerizable monomers; polyurethanes such as

those made from polyols and organic polyisocyanates; polycarbonates; polyacetals; polyethylene oxide; polyacrylics; etc. Particularly preferred polymeric materials are homopolymers and copolymers of α-olefins, particularly ethylene and propylene, which can be extruded into films.

Antioxidants are generally divided into phosphate, sulfide and hindered phenolic antioxidants. These materials serve to stabilize polymers against oxidation and deterioration by light or heat. It is the last class of hindered phenolic antioxidants that is of interest herein.

The hindered phenolic antioxidants used according to this invention are based on isocyanuric acid and are represented by the general formula

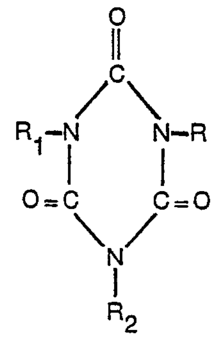

where R is a hydroxyphenylalkyleneyl radical having the formula

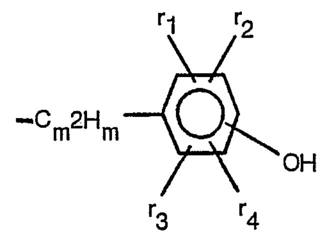

where m is an integer of 1 to 4; $r_1$ is an aliphatic or cycloaliphatic alkyl group containing 1 to 18 carbon atoms positioned immediately adjacent to the hydroxyl group on the ring, and $r_2$, $r_3$ and $r_4$ are individually selected from hydrogen atoms and aliphatic or cycloaliphatic groups containing 1 to 18 carbon atoms; and $R_1$ and $R_2$ are individually selected from hydrogen atoms or they can be same as R, defined above. In a preferred embodiment, $R_1$ and $R_2$ are defined as the R group. Preferred compounds in this class are tris(dialkylhydroxybenzyl)isocyanurates, more specifically, tris(3,5-di-t-alkyl-4-hydroxybenzyl)-isocyanurates wherein the alkyl groups contain 3 to 8 carbon atoms. Especially useful hindered phenols are the symmetrical tris-(3,5-di-t-alkyl-4-hydroxybenzyl)isocyanurates wherein the alkyl groups contain 4 to 8 carbon atoms. Specific examples of these compounds are tris(3,5-di-t-butyl-4-hydroxybenzyl)isocyanurate, tris(3-t-butyl-4-hydroxybenzyl)isocyanurate, tris(3-t-butyl-5-t-amyl-4-hydroxybenzyl)isocyanurate, tris(2,6-dimethyl-3-t-butyl-3-hydroxybenzyl)isocyanurate, and the like. U.S. patent 3,531,483 fully describes such hindered phenols and their preparation.

The 2-keto diazacycloalkanes are known ultraviolet light stabilizers. Those used in this invention are 2-keto-1,4-diazacycloalkanes (I and II) and 2-keto-1,5-diazacycloalkanes (III) having the following structural formulas:

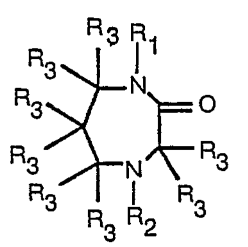
(I)

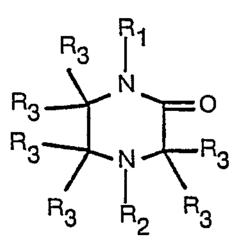
(II)

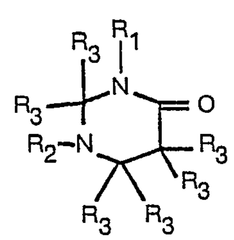
(III)

where $R_1$ and $R_2$ are individually selected from hydrogen, alkyl groups of 1 to 12 carbon atoms, hydroxyalkyl groups of 1 to 12 carbon atoms, hydroxycycloalkyl and cycloalkyl groups of 5 to 14 carbon atoms, haloalkyl groups of 1 to 12 carbon atoms, cyanoalkyl groups of 2 to 12 carbon atoms, aminoalkyl and iminoalkyl groups of 1 to 12 carbon atoms, ether groups of 3 to 18 carbon atoms, hydroxyalkyl ether and cyanoalkyl ether groups of 4 to 18 carbons, alkenyl and aralkenyl groups of 7 to 14 carbons, alkylene groups of 2 to 7 carbons, and $R_3$ is individually selected from groups corresponding to the definition of $R_1$ and $R_2$, above. In the context of the general disclosure of the 2-keto diazacycloalkanes, $R_1$ and $R_2$ are individually

selected from hydrogen atoms and lower alkyl groups of 1 to 5 carbon atoms, and one or both of the hydrogen atoms on the ring carbons can be substituted by lower alkyl groups of 1 to 5 carbon atoms.

Preferred 2-keto diazacycloalkanes are the bis compounds of 2-keto-1,4-diazacycloalkane having the following structural formula:

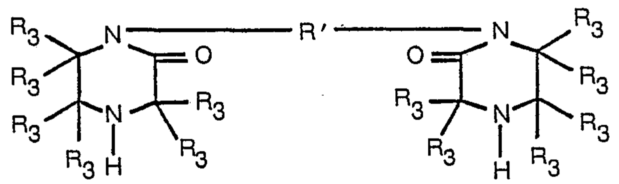

where R′ is an alkylene group of 1 to 8, preferably 2 to 4, carbon atoms; and each $R_3$ group is individually selected from hydrogen and alkyl radicals of 1 to 8, preferably 1 to 4, carbon atoms. Especially preferred are the compounds defined above wherein the $R_3$ groups at the 6th position are both hydrogen. Specific examples in the preferred class of 2-keto-1,4-diazacycloalkanes include 1,2-ethane-bis-(N′-3,3,5,5-tetramethyl-2-piperazinone), 1,2-ethane-bis-(N′-3,3,5,5,6-pentamethyl-2-piperazinone), and the like. These compounds, their preparation and use, are disclosed in U.S. patents 4,167,512 and 4,190,571.

Processing stability of a polymeric resin is determined by extruding and re-extruding the resin at a predetermined temperature for four or five passes. The melt flow index, which is described in ASTM method D1238, is determined on a sample of resin after each pass by determining a weighed amount of heated polymer which flows through an orifice in a fixed time interval at a constant pressure. Ideally, melt flow index of a given compound should not change with repeated passes through the extruder. In practice, however, the rate of change at a given temperature is dependent on the effectiveness of the processing stabilizer present in the resin. A higher melt flow index and lower viscosity indicate resin degradation.

To determine processing stability, ageing, and water carryover, polypropylene resin formulations were prepared by blending a portion of polypropylene powder with or without antioxidants and/or UV stabilizers in a Waring blender to form a concentrate which was then mixed with the remaining polypropylene powder in a Henschel mixer for 3 minutes at 2000 rpm. The powder blend was extruded into rods at 215°C using 3,18 cm (1—1/4 inch) Brabender extruder with air cooling. The extrudate was water-cooled and pelletized. Stretched ribbons were prepared by extruding the compounds through a film die to form a film, quenching the film in a water bath, slitting the film into a plurality of ribbons, and stretching the ribbons in a hot air oven at a draw ratio of 6:1.

Pursuant to the melt index test described above, experiments were run to determine processing stability of stabilized polypropylene during extrusion. In these experiments, a batch of stabilized polypropylene resin was extruded and re-extruded for a total of five passes. A small sample was retained after each pass and its melt flow index, i.e., viscosity, was determined, as described previously. The greater the change in melt flow between two consecutive passes the greater the degradation that has taken place during the extrusion process. Melt flow values were plotted on the Y-axis with the corresponding extrusion pass number on the X-axis. The steeper the slope of a plot, which is indicated by the number on the plot, the more unstable is the polypropylene resin toward repeated extrusion.

Figures 1 and 2 summarize results of melt flow index tests obtained at an extrusion temperature of 270°C at 40 rpm with 3,18 cm (1—1/4 inch) screw for up to five passes. The resin was polypropylene containing antioxidant A alone as well as increasing amounts of compounds B and C. Antioxidant A was tris(3,5-di-t-butyl-4-hydroxybenzyl)-isocyanurate, compound B was 1,1′-(1,2-ethanediyl)-bis-(3,3,5,5,7-pentamethyl)-1,4-diazacycloheptane-2-one, and compound C was 1,1′-(1,2-ethanediyl)-bis(3,3,5,5-tetramethyl-2-piperazinone). Compound A is a well known antioxidant and compounds B and C are well known ultraviolet light absorbers.

Analysis of Fig. 1 shows that at a loading of 0.05 phr of antioxidant A alone, melt flow index after four passes was 15.3 whereas with 0.05 phr of antioxidant A and 0.02 phr of compound B, melt index dropped to 13.0 which further dropped to 11.6 when compound B was increased to 0.05 phr.

Fig. 2 shows a melt index of 15.4 for 0.05 phr of antioxidant A in polypropylene after four passes at 270°C which index was reduced to 12.2 when 0.02 phr of compound C was added. Increasing amount of compound C to 0.05 phr resulted in melt index of 10.1, a reduction of about one-third. Performance of compounds B and C at the extrusion temperature of 270°C has shown achievement of an acceptable level of processing stability. Perusal of Figs. 3 and 4, which show melt indices at extrusion temperature of 300°C, illustrates the better performance of compound B over compound C at the higher temperature of 300°C. Melt index of polypropylene resin containing 0.05 phr of antioxidant A and 0.10 phr compound B was 13.3 after four passes whereas with 0.10 phr of compound C in place of compound B, the resin became degraded.

To determine effect of the additives on ageing of the polypropylene film, the ribbons were mounted on holders and exposed in an Atlas carbon arc weatherometer, Model XWR. The ribbon samples were exposed to 102 minutes of light followed by 18 minutes of water spray per cycle. Black panel temperature was set at 63°C (145°F). Tensile strength was measured at various intervals to determine the ageing effect thereon.

Figs. 5 and 6 are plots of tensile strength versus hours in a weatherometer of polypropylene film containing antioxidant A in one series and antioxidant A with compound C in the other. Fig. 5 shows that increasing amount of antioxidant A from 0.05 phr to 0.10 phr is beneficial beyond a certain period of time in the weatherometer with beneficial effect accelerating beyond about 100 hours. When the polypropylene film was prepared with 0.05 phr of antioxidant A and 0.02 phr of compound C, Fig. 6 shows that beyond about 120 hours in the weatherometer, tensile strength was vastly and unexpectedly benefited by inclusion of compound C.

The water carryover tests were measured using test apparatus which included 6,35 cm (2—1/2 inch) Johnson extruder operated at 120 rpm at head pressure of 103,4 bar (1500 psi) equipped with a downwardly mounted 25,4 cm (10-inch) film die, a water bath and a set of motor driven nip rolls mounted immediately above the bath which pull the film out of water and also provide means of varying the speed of the film. Water bath temperature was maintained at 38°C (100°F). Extruder was operated at a temperature of 260°C (500°F). This equipment is about 1/3 the size of typical production equipment and was found to be necessary to obtain meaningful water carryover data. Smaller equipment does not appear to provide meaningful results. The distance between surface of the water in the bath and the lip of the film die was held constant at 1,91 cm (3/4 of an inch). Criterion for measuring water carryover is the speed of the film at which the wall of water formed on the film just above the surface of the water breaks or begins to dissipate drops which stick to the moving film. Results of the water carryover tests on polypropylene film are given in Table I, below, where water carryover (WCO) is measured in meter per minute (feet per minute) and amounts of additives are given in parts per 100 parts of the polymeric material.

TABLE I

| | 1 | 2 | 3 |
|---|---|---|---|
| Compound A | 0.10 | 0.05 | 0.05 |
| Compound B | — | — | 0.05 |
| Compound C | — | 0.05 | — |
| Compound D | — | — | — |
| Compound E | — | — | — |
| WCO [ft/min] | 109 | 128 | 128 |
| WCO [m/min] | 33.2 | 39.0 | 39.0 |

The water carryover values given in Table I represent an average of about five tests.

As is shown in Table I, sample 1 of polypropylene film containing 0.10 part of compound A, a phenolic antioxidant, had a water carryover of 33.2 $m.min^{-1}$ (109 feet per minute). When 0.05 part of compound A and 0.05 part of compound C, a 2-keto-1,4-diazacycloalkane UV stabilizer, were used to make polypropylene sample 2, water carryover increased dramatically to 39.0 $m.min^{-1}$ (128 feet per minute) which was the same for sample 3 wherein compound B, another 2-keto-1,4-diazacycloalkane, was substituted for compound C in the same amount of 0.05 part.

It should be remembered that compounds B and C are UV stabilizers, and although they exhibit superb water carryover property, they do not provide the desired antioxidant protection of compound A, the presence of which is imperative for sundry applications.

**Claims**

1. Method of making slit tape comprising extruding a polymer composition in the form of a sheet into a cooling water bath, slitting the sheet into ribbons after the sheet is withdrawn from the water bath, conveying the ribbons into an oven, and stretching the ribbons while they are in the oven to form slit tape, the polymer composition containing 0.005 to 0.5 parts of a component A and 0.001 to 1 part of a component B per 100 parts of the polymer composition to reduce water carryover and improved processing stability,

component A is selected from hindered phenolic compounds and mixtures thereof, wherein said compounds have the following general formula:

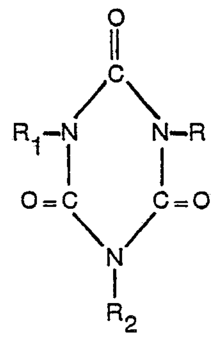

where R is a radical having the formula

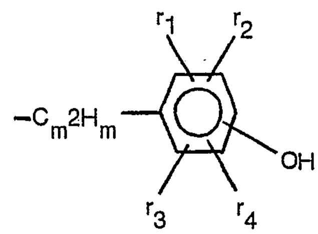

where m is a number of 1 to 4; $r_1$ is an aliphatic or cycloaliphatic alkyl group containing 1 to 18 carbon atoms positioned immediately adjacent to the hydroxyl group on the ring, and $r_2$, $r_3$ and $r_4$ are individually selected from hydrogen atoms and aliphatic or cycloaliphatic groups containing 1 to 18 carbon atoms; and $R_1$ and $R_2$ are individually selected from hydrogen atoms or they can be individually defined as the R group, above; and

component B is selected from 2-keto-1,4-diazacycloalkanes (I and II), 2-keto-1,5-diazacycloalkanes (III), and bis compounds thereof, having the following structural formulas:

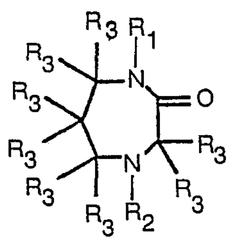

(I)

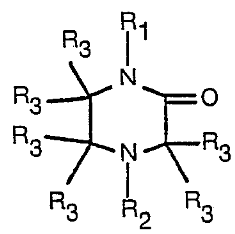

(II)

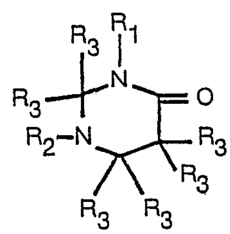

(III)

where $R_1$ and $R_2$ are individually selected from hydrogen atoms, alkyl groups of 1 to 12 carbon atoms, hydroxyalkyl groups of 1 to 12 carbon atoms, hydroxycycloalkyl and cycloalkyl groups of 5 to 14 carbon atoms, haloalkyl groups of 1 to 12 carbon atoms, cyanoalkyl groups of 2 to 12 carbon atoms, aminoalkyl and iminoalkyl groups of 1 to 12 carbon atoms, ether groups of 3 to 18 carbon atoms, hydroxyalkyl ether and cyanoalkyl ether groups of 4 to 18 carbon atoms, alkenyl and aralkenyl groups of 7 to 14 carbon atoms, and alkylene groups of 2 to 7 carbon atoms; and $R_3$ is individually selected from groups corresponding to the definition of $R_1$ and $R_2$, above.

2. Method of claim 1 wherein component B is selected from bis compounds of 2-keto-1,4-diazacycloalkanes having the following structural formula:

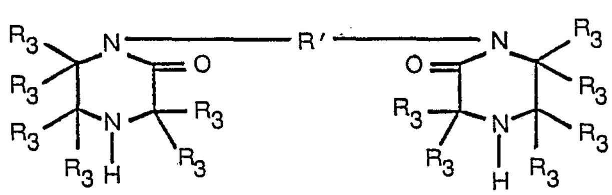

where R' is selected from alkylene radicals of 1 to 8 carbon atoms and each $R_3$ is individually selected from hydrogen atoms and alkyl radicals of 1 to 8 carbon atoms.

3. Method of claim 2 wherein component A is selected from tris(dialkylhydroxybenzyl)isocyanurates.

4. Method of claim 3 wherein component A is selected from tris(3,5-di-t-alkyl-4-hydroxybenzyl)isocyanurates wherein the alkyl groups contain 3 to 8 carbon atoms.

5. Method of claim 4 wherein amount of component A is 0.01 to 0.09 part and amount of component B is 0.005 to 0.5 part per 100 parts of the polymeric material which is selected from homopolymers of alphaolefins and their copolymers.

6. Method of claim 5 wherein the polymeric material is selected from polyethylene, polypropylene and copolymers thereof with copolymerizing monomers; vinyl resins; polyurethanes; polycarbonates; polyethylene oxide; and polyacrylics.

7. Method of claim 6 wherein the polymeric material is selected from polyethylene, polypropylene and copolymers thereof with copolymerizable monomers.

8. Method of claim 1 wherein the polymeric material is selected from polyethylene, polypropylene and copolymers with copolymerizable monomers; amount of component A is 0.01 to 0.09 part and amount of component B is 0.005 to 0.5, per 100 parts of the polymeric material; and component A is selected from tris(3,5-di-t-alkyl-4-hydroxybenzyl)isocyanurates wherein the alkyl groups contain 3 to 8 carbon atoms.

**Patentansprüche**

1. Verfahren zur Herstellung von geschnittenem Band durch Extrudieren einer Polymer-Zusammensetzung in Form einer Folie in ein Kühlwasser-Bad, Zerschneiden der Folie in Streifen nach dem Herausnehmen der Folie aus dem Wasserbad, Transportieren der Streifen in einen Ofen und Verstrecken der Streifen während ihres Aufenthaltes in dem Ofen, wodurch geschnittenes Band gebildet wird, wobei die Polymer-Zusammensetzung 0,005 bis 0,5 Teile einer Komponente A und 0,001 bis 1 Teile einer Komponente B auf 100 Teile der Polymer-Zusammensetzung enthält, um das Verschleppen von Wasser zu verringern und die Verarbeitungsbeständigkeit zu verbessern, dadurch gekennzeichnet, daß die Komponente A aus gehinderten phenolischen Verbindungen und deren Mischungen ausgewählt ist, wobei diese Verbindungen die folgende allgemeine Formel

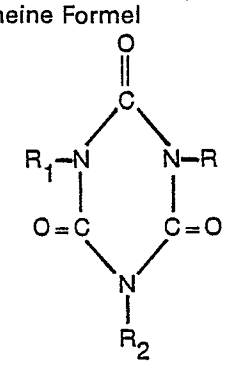

besitzen, in der

R ein Rest der Formel

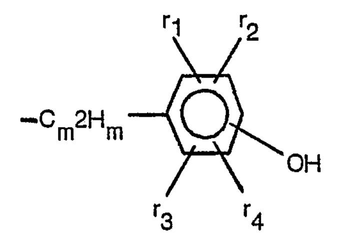

ist, in der

m eine Zahl von 1 bis 4 ist,

$r_1$ eine aliphatische oder cycloaliphatische Alkyl-Gruppe mit 1 bis 18 Kohlenstoff-Atomen ist, die in einer Position unmittelbar benachbart der Hydroxyl-Gruppe an dem Ring steht und

$R_2$, $r_3$ und $r_4$ einzeln ausgewählt sind aus Wasserstoff-Atomen und aliphatischen oder cycloaliphatischen Gruppen mit 1 bis 18 Kohlenstoff-Atomen, und

$R_1$ und $R_2$ einzeln ausgewählt sind aus Wasserstoff-Atomen oder einzeln als die Gruppe R wie vorstehend definiert werden können, und

die Komponente B aus 2-Keto-1,4-diazacycloalkanen (I und II), 2-Keto-1,5-diazacycloalkanen (III) und deren Bis-Verbindungen ausgewählt ist, wobei diese Verbindungen die folgenden Strukturformeln

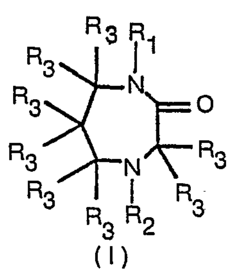

(I)

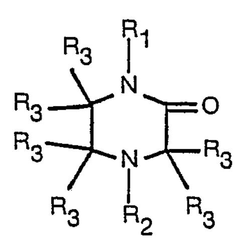

(II)

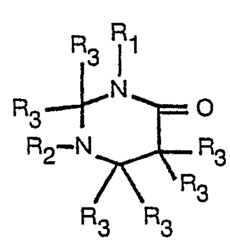

(III)

haben, in denen

$R_1$ und $R_2$ einzeln ausgewählt sind aus Wasserstoff-Atomen, Alkyl-Gruppen mit 1 bis 12 Kohlenstoff-Atomen, Hydroxyalkyl-Gruppen mit 1 bis 12 Kohlenstoff-Atomen, Hydroxycycloalkyl- und Cycloalkyl-Gruppen mit 5 bis 14 Kohlenstoff-Atomen, Halogenoalkyl-Gruppen mit 1 bis 12 Kohlenstoff-Atomen, Cyanoalkyl-Gruppen mit 2 bis 12 Kohlenstoff-Atomen, Aminoalkyl- und Iminoalkyl-Gruppen mit 1 bis 12 Kohlenstoff-Atomen, Ether-Gruppen mit 3 bis 18 Kohlenstoff-Atomen, Hydroxyalkylether- und Cyanoalkylether-Gruppen mit 4 bis 18 Kohlenstoff-Atomen, Alkenyl- und Aralkenyl-Gruppen mit 7 bis 14 Kohlenstoff-Atomen und Alkenyl-Gruppen mit 2 bis 7 Kohlenstoff-Atomen und

$R_3$ einzeln ausgewählt ist aus Gruppen, die der Definition von $R_1$ und $R_2$ wie vorstehend entsprechen.

2. Verfahren nach Anspruch 1, dadurch gekennzeichnet, daß die Komponente B aus Bis-Verbindungen von 2-Keto-1,4-diazacycloalkanen der folgenden Strukturformel

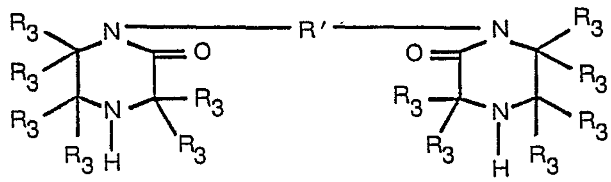

ausgewählt ist, in der

R' ausgewählt ist aus Alkylen-Resten mit 1 bis 8 Kohlenstoff-Atomen und

$R_3$ einzeln ausgewählt ist aus Wasserstoff-Atomen und Alkyl-Resten mit 1 bis 8 Kohlenstoff-Atomen.

3. Verfahren nach Anspruch 2, dadurch gekennzeichnet, daß die Komponente A aus Tris(dialkylhydroxybenzyl)isocyanuraten ausgewählt ist.

4. Verfahren nach Anspruch 3, dadurch gekennzeichnet, daß die Komponente A aus Tris(3,5-di-t-alkyl-4-hydroxybenzyl)isocyanuraten ausgewählt ist, in denen die Alkyl-Gruppen 3 bis 8 Kohlenstoff-Atome enthalten.

5. Verfahren nach Anspruch 4, dadurch gekennzeichnet, daß die Menge der Komponente A 0,01 bis 0,09 Teile und die Menge der Komponente B 0,005 bis 0,5 Teile auf 100 Teile des polymeren Materials beträgt, das aus Homopolymeren von alpha-Olefinen und ihren Copolymeren ausgewählt ist.

6. Verfahren nach Anspruch 5, dadurch gekennzeichnet, daß das polymere Material aus Polyethylen, Polypropylen und deren Copolymeren mit copolymerisierenden Monomeren, Vinyl-Harzen, Polyurethanen, Polycarbonaten, Polyethylenoxid und Polyacryl-Verbindungen ausgewählt ist.

7. Verfahren nach Anspruch 6, dadurch gekennzeichnet, daß das polymere Material aus Polyethylen, Polypropylen und deren Copolymeren mit copolymerisierenden Monomeren ausgewählt ist.

8. Verfahren nach Anspruch 1, dadurch gekennzeichnet, daß das polymere Material aus Polyethylen, Polypropylen und deren Copolymeren mit copolymerisierenden Monomeren ausgewählt ist, die Menge der Komponente A 0,01 bis 0,09 Teile und die Menge der Komponente B 0,005 bis 0,5 Teile auf 100 Teile des polymeren Materials beträgt und die Komponente A aus Tris(3,5-di-t-alkyl-4-hydroxybenzyl)isocyanuraten ausgewählt ist, in denen die Alkyl-Gruppen 3 bis 8 Kohlenstoff-Atome enthalten.

**Revendications**

1. Procédé de fabrication d'une bande découpée consistant à extruder une composition de polymère sous forme de feuille dans un bain d'eau froide, à découper la feuille en rubans après extraction de la feuille du bain d'eau, à acheminer les rubans vers un four et à étirer les rubans pendant qu'ils se trouvent dans le four pour former une bande découpée, la composition de polymère contenant 0,005 à 0,5 partie d'un constituant A et 0,001 à 1 partie d'un constituant B pour 100 parties de la composition de polymère en vue de réduire l'entraînement d'eau et améliorer la stabilité à la transformation, le constituant A étant choisi parmi des composés phénoliques à empêchement stérique et leurs mélanges, auquel cas lesdits composés répondent à la formule générale suivante:

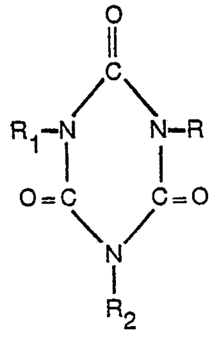

où R est un radical de formule

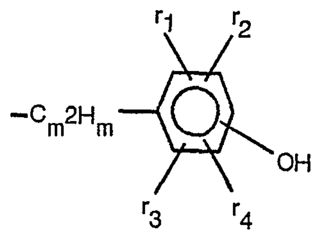

dans laquelle m est un nombre de 1 à 4, $r_1$ est un groupe alkyle aliphatique ou cycloaliphatique renfermant 1 à 18 atomes de carbone en position adjacente au groupe hydroxyle sur le noyau, $r_2$, $r_3$ et $4_4$ sont choisis individuellement parmi les atomes d'hydrogène et des groupes aliphatiques ou cycloaliphatiques contenant 1 à 18 atomes de carbone; et $R_1$ et $R_2$ sont choisis individuellement parmi les atomes d'hydrogène ou peuvent être individuellement définis comme le groupe R ci-dessus et le composé B étant choisi parmi les 2-céto-1,4-diazacycloalcanes (I et II), les 2-céto-1,5-diazacycloalcanes (III) et leurs bis composés posédant les formules développées suivantes

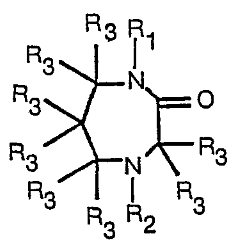

(I)

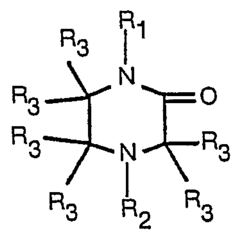

(II)

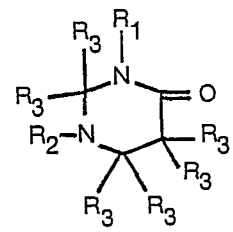

(III)

dans lesquelles $R_1$ et $R_2$ sont choisis individuellement parmi les atomes d'hydrogène, des groupes alkyles de 1 à 12 atomes de carbone, des groupes hydroxyalkyles de 1 à 12 atomes de carbone, des groupes hydroxycycloalkyles et cycloalkyles de 5 à 14 atomes de carbone, des groupes haloalkyles de 1 à 12 atomes de carbone, des groupes cyanoalkyles de 2 à 12 atomes de carbone, des groupes aminoalkyles et iminoalkyles de 1 à 12 atomes de carbone, des groupes éthers de 3 à 18 atómes de carbone, des groupes hydroxyalkyl éthers et cyanoalkyl éthers de 4 à 18 atomes de carbone, des groupes alcényles et aralcényles de 7 à 14 atomes de carbone et des groupes alkylènes de 2 à 7 atomes de carbone et $R_3$ est choisi individuellement parmi les groupes correspondant à la définition de $R_1$ et $R_2$ ci-dessus.

2. Procédé selon la revendication 1, caractérisé en ce que le constituant B est choisi parmi les bis composés de 2-céto-1,4-diazacycloalcanes possédant la formule développée suivante

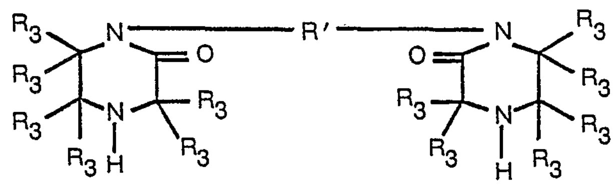

dans laquelle R' est choisi parmi des radicaux alkylènes de 1 à 8 atomes de carbone et chaque $R_3$ est choisi individuellement parmi les atomes d'hydrogène et des radicaux alkyles de 1 à 8 atomes de carbone.

3. Procédé selon la revendication 2, caractérisé en ce que le constituant A est choisi parmi les tris(dialkylhydroxybenzyl)isocyanurates.

4. Procédé selon la revendication 3, caractérisé en ce que le constituant A est choisi parmi des tris(3,5-di-t-alkyl-4-hydroxybenzyl)isocyanurates dans lesquels les groupes alkyles contiennent 3 à 8 atomes de carbone.

5. Procédé selon la revendication 4, caractérisé en ce que la quantité du constituant A est de 0,01 à 0,09 partie et que la quantité du constituant B est de 0,005 à 0,5 partie pour 100 parties de la matière polymère qui est choisie parmi des homopolymères d'alpha oléfines et leurs copolymères.

6. Procédé selon la revendication 5, caractérisé en ce que la matière polymère est choisie parmi le polyéthylène, le polypropylène et leurs copolymères avec des monomères copolymérisables; les résines vinyliques; les polyuréthannés; les polycarbonates; le poly(oxyde d'éthylène) et les polyacryliques.

7. Procédé selon la revendication 6, caractérisé en ce que la matière polymère est choisie parmi le polyéthylène, le polypropylène et leurs copolymères avec les monomères copolymérisables.

8. Procédé selon la revendication 1, caractérisé en ce que la matière polymère est choisie parmi le polyéthylène, le polypropylène et des copolymères avec des monomères copolymérisables; que la quantité du constituant A est de 0,01 à 0,09 partie et la quantité de constituant B de 0,005 à 0,5 partie pour 100 parties de la matière polymère et que le constituant A est choisi parmi des tris(3,5-di-t-alkyl-4-hydroxybenzyl)isocyanurates dans lesquels les groupes alkyles contiennent 3 à 8 atomes de carbone.

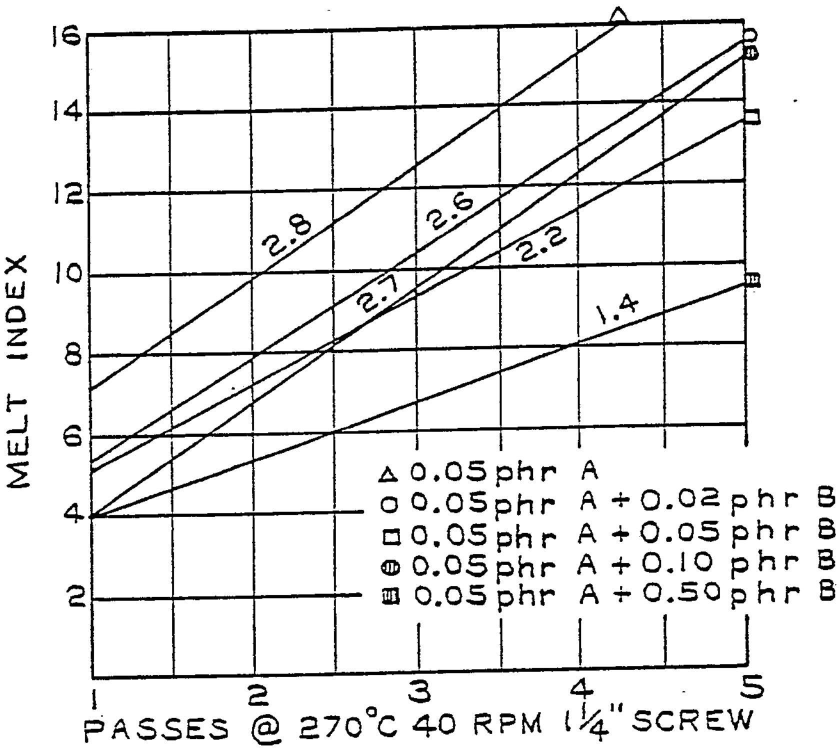
16
14
12
10
8
6
4
2
MELT INDEX
2.8
2.6
2.7
2.2
1.4
△ 0.05 phr A
○ 0.05 phr A + 0.02 phr B
□ 0.05 phr A + 0.05 phr B
⊕ 0.05 phr A + 0.10 phr B
⊞ 0.05 phr A + 0.50 phr B
1
2
3
4
5
PASSES @ 270°C 40 RPM 1¼" SCREW

FIG. 1

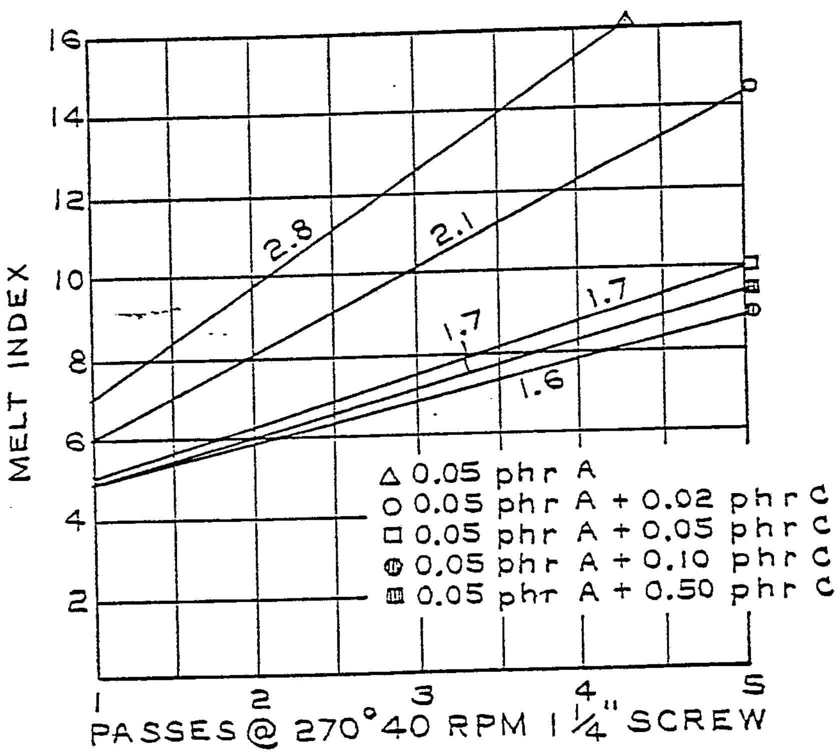
16
14
12
10
8
6
4
2
MELT INDEX
2.8
2.1
1.7
1.7
1.6
△ 0.05 phr A
○ 0.05 phr A + 0.02 phr C
□ 0.05 phr A + 0.05 phr C
⊕ 0.05 phr A + 0.10 phr C
⊞ 0.05 phr A + 0.50 phr C
1
2
3
4
5
PASSES @ 270° 40 RPM 1¼" SCREW

FIG. 2

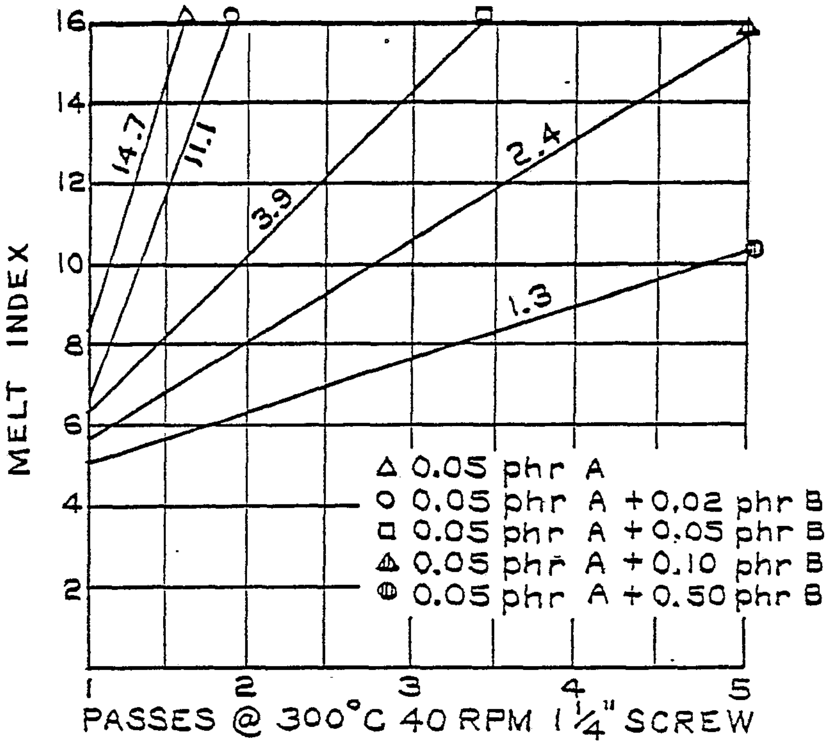
16
14
12
10
8
6
4
2
MELT INDEX
14.7
11.1
3.9
2.4
1.3
△ 0.05 phr A
○ 0.05 phr A +0.02 phr B
□ 0.05 phr A +0.05 phr B
0.05 phr A +0.10 phr B
0.05 phr A +0.50 phr B
1
2
3
4
5
PASSES @ 300°C 40 RPM 1 1/4" SCREW

Fig.3

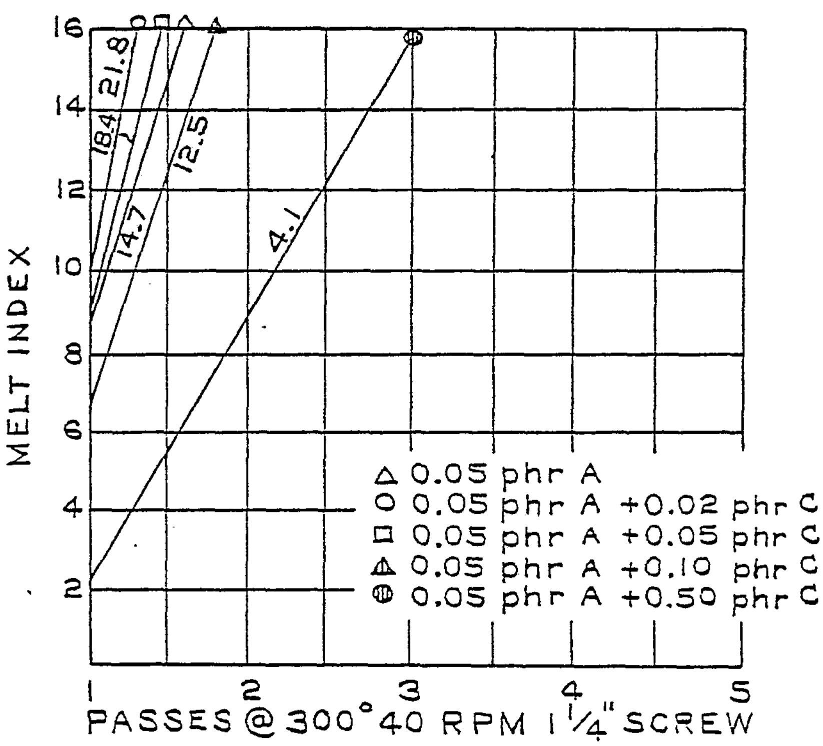
16
14
12
10
8
6
4
2
MELT INDEX
21.8
18.4
14.7
12.5
4.1
△ 0.05 phr A
○ 0.05 phr A +0.02 phr C
□ 0.05 phr A +0.05 phr C
0.05 phr A +0.10 phr C
0.05 phr A +0.50 phr C
1
2
3
4
5
PASSES @ 300° 40 RPM 1 1/4" SCREW

Fig.4

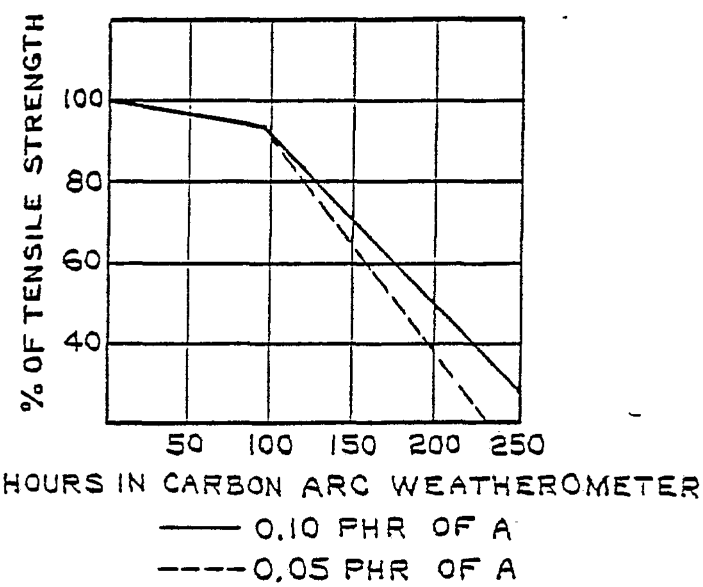
% OF TENSILE STRENGTH
100
80
60
40
50
100
150
200
250
HOURS IN CARBON ARC WEATHEROMETER
—— 0.10 PHR OF A
---- 0.05 PHR OF A

FIG. 5

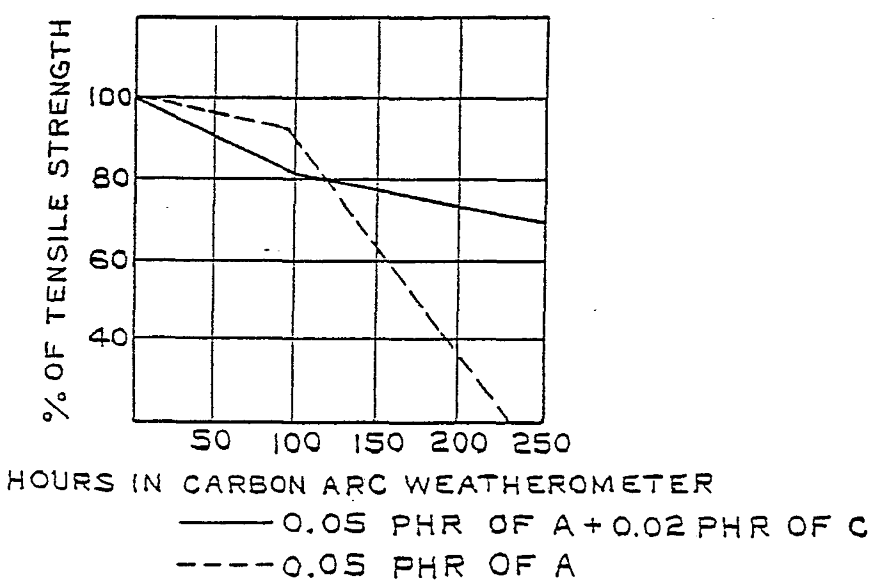
% OF TENSILE STRENGTH
100
80
60
40
50
100
150
200
250
HOURS IN CARBON ARC WEATHEROMETER
—— 0.05 PHR OF A + 0.02 PHR OF C
---- 0.05 PHR OF A

FIG. 6